# EUROPÄISCHE PATENTSCHRIFT

(11) **EP 0 835 543 B1**
(45) Veröffentlichungstag und Bekanntmachung des Hinweises auf die Patenterteilung: **24.10.2001**
(21) Anmeldenummer: 97906181.9
(22) Anmeldetag: 06.03.1997
(51) Int. Cl.: H02G 3/04

(54) **FLEXIBLE SCHLAUCHHÜLLE**
FLEXIBLE CLADDING
GAINE SOUPLE

(30) Priorität: 28.03.1996 DE 29605749 U
(43) Veröffentlichungstag der Anmeldung: 15.04.1998
(73) Patentinhaber: Zipper-Technik Gmbh, 63263 Neu-Isenburg (DE)
(72) Erfinder: JENNER, Detlef, D-72213 Altensteig (DE)
(74) Vertreter: Selting, Günther, Dipl.-Ing.
(86) Internationale Anmeldenummer: EP9701134
(87) Internationale Veröffentlichungsnummer: WO9737412

(56) Entgegenhaltungen:
- DE-C- 19 519 849
- DE-C- 19 522 405

## Beschreibung

Die Erfindung betrifft eine flexible Schlauchhülle aus einem bahnförmigen Mantel, der längslaufende Verschlußteile aufweist und zwischen diesen mit zieharmonikaartigen längslaufenden Ausformungen versehen ist.

Eine derartige Schlauchhülle ist bekannt aus DE 195 19 849 C1. Solche Schlauchhüllen dienen zum Umhüllen langgestreckter Gegenstände oder Bündel von Gegenständen, beispielsweise von Kabelschläuchen, Rohren oder anderen Elementen, die zusammengehalten werden müssen, beispielsweise zum Zusammenfassen einer Rohrummantelung aus Isoliermaterial. Die bekannte Schlauchhülle hat zieharmonikaartige Ausformungen, welche ihr eine gewisse Dehnung in Umfangsrichtung ermöglichen. Beispielsweise ist bei Biegungen des Schlauchverlaufs eine gewisse Dehnungsfähigkeit erforderlich, während andererseits in geraden Abschnitten das umfaßte Material eng umschlossen werden soll.

Der Erfindung liegt die Aufgabe zugrunde, eine flexible Schlauchhülle mit zieharmonikaartigen längslaufenden Ausformungen zu schaffen, die ein verbessertes Verformungsverhalten aufweist.

Die Lösung dieser Aufgabe erfolgt erfindungsgemäß mit den im Patentanspruch 1 angegebenen Merkmalen.

Bei der erfindungsgemäßen Schlauchhülle sind die Ausformungen als gerundete Wellen ausgebildet. Dies hat den Vorteil, daß der bahnförmige Mantel in Querrichtung gestreckt werden kann, wobei die Ausformungen sich unter Zugwirkung vollständig zurückbilden können. Bei zickzackförmigen Ausformungen, wie sie bei der Schlauchhülle nach DE 195 19 849 C1 vorgesehen sind, wird die Gesamtstruktur des bahnförmigen Mantels starr. Die Ausformungen bilden Grate, die sich auch bei starkem Zug nicht zurückbilden und demnach eher eine Versteifung des Mantels hervorrufen als die Dehnbarkeit, insbesondere bei Umbiegungen, zu vergrößern. Wegen der mit der Zickzackform verbundenen Änderung des Materialquerschnitts, die mit einer Prägewirkung verbunden ist, besteht die Gefahr des Kaltbruchs.

Demgegenüber ist bei der erfindungsgemäßen Schlauchhülle der bahnförmige Mantel unter Beibehaltung seiner Wandstärke lediglich wellenförmig konturiert, ohne daß eine wesentliche Formänderung des Materialquerschnitts erfolgt. Dies hat die Wirkung, daß der Mantel insgesamt relativ weich ist und um Gegenstände von unterschiedlichen Abmessungen herumgelegt werden kann, wobei er sich von außen eng an den umhüllten Gegenstand anschmiegt. Dies kann so weit gehen, daß die gerundeten Wellen vollständig zurückgeformt werden. Ist der umhüllte Gegenstand dagegen dünner, so bleiben die gerundeten Wellen, die das Bestreben haben, sich zusammenzuziehen, erhalten, wobei der Gegenstand mit einer gewissen Spannung umschlossen wird.

Die Erfindung beruht auf der Erkenntnis, daß ein bahnförmiger Mantel, dessen Ausformungen als gerundete Wellen ausgebildet sind, immer eine gewisse Elastizität in Querrichtung (bzw. Umfangsrichtung) hat, andererseits aber so weich ist, daß er sich unterschiedlichen Durchmessern des umhüllten Materials leicht anpaßt und auch die bei Umbiegungen erforderliche örtliche Erweiterung zuläßt.

Vorzugsweise sind die Ausformungen derart ausgebildet, daß die Materialstärke in Richtung einer Normalen zu einer Tangente, die im Bereich der Welle an die Bahn gelegt ist, an allen Stellen gleich ist. Dies bedeutet, daß die Materialbahn konstante Stärke hat, wobei lediglich ihre Gesamtform wie bei einem Wellblech konturiert ist.

Die Höhe der Wellen beträgt vorzugsweise mehr als das Doppelte der Stärke der Bahn, insbesondere mehr als das Vierfache der Bahnstärke.

Ein weiterer Aspekt bei derartigen Schlauchhüllen ist das Schließen der längslaufenden Verschlußteile. Diese Verschlußteile sind an ihren zusammengreifenden Seiten mit "Pfeil und Nut" ausgestaltet, während die einander abgewandten Seiten trapezförmige Nuten sind, in die entsprechende Drückwerkzeuge eingesetzt werden. Nach der Erfindung sind die an den Verschlußteilen zum Schließen vorgesehenen Nuten mit Nutflanken ausgestattet, die im wesentlichen parallel verlaufen oder (sogar) nach außen konvergieren. Hierdurch wird eine wesentlich bessere Führung der Verschlußwerkzeuge sichergestellt, ohne die Gefahr des seitlichen Herausgleitens aus den Nuten.

Im folgenden wird unter Bezugnahme auf die Zeichnungen ein Ausführungsbeispiel der Erfindung näher erläutert.

Es zeigen:
- Fig. 1: den Querschnitt der Schlauchhülle im flachliegenden Zustand, und
- Fig. 2: den Querschnitt der geschlossenen Schlauchhülle.

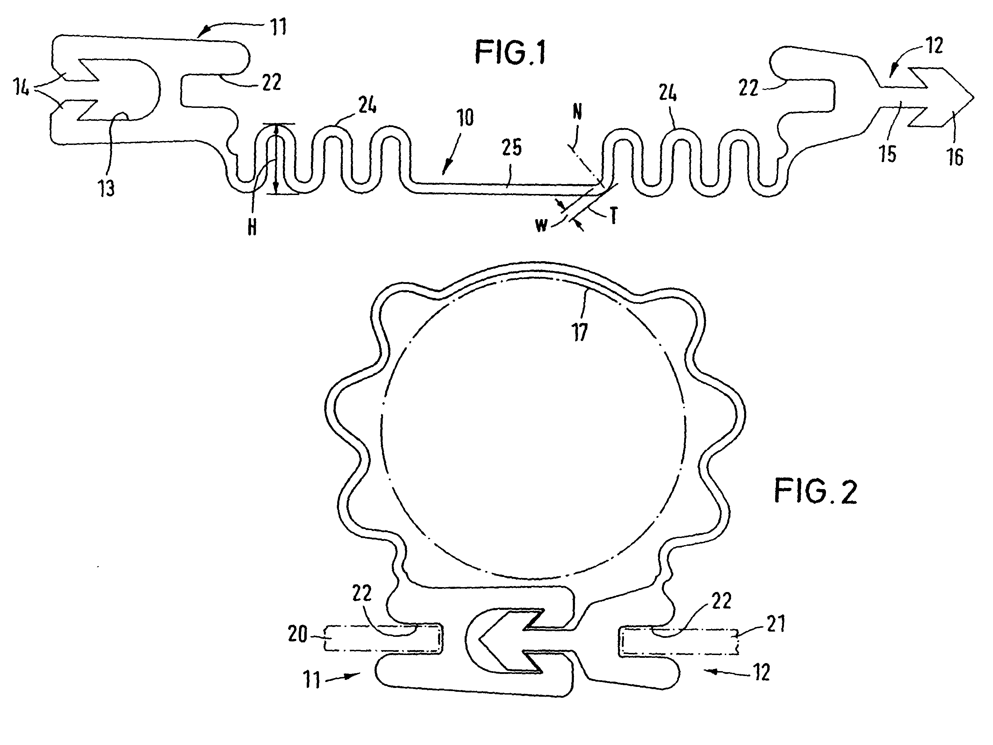

Die Schlauchhülle weist einen bahnförmigen Mantel 10 auf, der an seinen längslaufenden Rändern jeweils mit einem Verschlußteil 11 bzw. 12 versehen ist. Das eine Verschlußteil 11 ist als "Nut" und das andere Verschlußteil 12 als "Pfeil" ausgebildet. Das Verschlußteil 11 weist eine Nut 13 auf, die an ihrer Öffnungsseite durch gegeneinandergerichtete Haken 14 begrenzt ist. Das Verschlußteil 12 ist dagegen mit einem Steg 15 versehen, an den sich eine Pfeilspitze 16 anschließt. Die Pfeilspitze 16 kann unter Aufspreizung der Haken 14 in die Nut 13 eingeschoben werden, wo sie sich verhakt und somit gegen Herausziehen gesichert ist, so wie dies in Fig. 2 dargestellt ist.

Beim Umhüllen eines Kabelbaumes oder eines anderen langgestreckten Gegenstandes 17 wird der Mantel 10 um den Gegenstand herumgelegt und anschließend werden die Verschlußteile 11,12 in gegenseitigen Eingriff gebracht. Dies geschieht mit Hilfe eines Verschlußwerkzeuges in Form einer Zange, die zwei drehbare Rollen 20,21 aufweist, welche gegeneinandergedrückt werden können und gemeinsam in Längsrichtung der Verschlußteile bewegt werden. Zur Führung der Rollen 20,21 sind an den Außenseiten der Verschlußteile 11 und 12 jeweils Nuten 22 vorgesehen. Diese Nuten haben erfindungsgemäß im wesentlichen parallele Nutflanken, d.h. jede Nut 22 hat über ihre Tiefe eine im wesentlichen konstante Breite. Eventuell können die Nuten sogar hinterschnitten oder schwalbenschwanzförmig ausgebildet sein, wobei dann ihre Nutflanken nach außen divergieren. Außen bezeichnet in diesem Fall den Eingriffszustand nach Fig. 2, wo die Nuten 22 voneinander abgewandt sind. Die Schlauchhülle ist insgesamt einstückig aus Kunststoff hergestellt, wobei die Verschlußteile 11 und 12 als Profile an die Ränder des bahnförmigen Mantels 10 angeschweißt sind.

Der Mantel 10 besteht aus einer Folie, die über die gesamte Breite konstante Stärke aufweist. Im Bereich des Mantels sind Ausformungen 24 in Form gerundeter Wellen ausgebildet. Die Höhe H der Wellen beträgt etwa das Fünffache der Materialstärke des Mantels 10. Im vorliegenden Fall sind zwei Abschnitte von sinusförmigen Ausformungen beidseitig eines ebenen Mittelbereichs 25 angeordnet. An jeder Stelle ist die Materialstärke w in Richtung einer Normalen N zu einer Tangente T, die an die Bahn 10 gelegt ist, gleich. Dies hat zur Folge, daß der Mantel 10 eine hohe Dehnfähigkeit hat und dennoch relativ weich ist, so daß er sich sowohl an die zu umhüllenden Gegenstände 17 von außen her anpaßt als auch bei etwaigen Biegungen des Stranges hinreichend aufgeweitet werden kann.

## Patentansprüche

1. Flexible Schlauchhülle aus einem bahnförmigen Mantel (10), der längslaufende Verschlußteile (11,12) aufweist und zwischen diesen mit zieharmonikaartigen längslaufenden Ausformungen (24) versehen ist,
**dadurch gekennzeichnet,**
**daß** die Ausformungen (24) als gerundete Wellen ausgebildet sind.

2. Schlauchhülle nach Anspruch 1, **dadurch gekennzeichnet, daß** die Materialstärke des Mantels (10) in Richtung einer Normalen (N) zu einer Tangente (T), die im Bereich der Wellen an die Bahn gelegt ist, an allen Stellen gleich ist.

3. Schlauchhülle nach Anspruch 1 oder 2, **dadurch gekennzeichnet, daß** die Höhe (H) der Wellen mehr als das Doppelte der Stärke der Bahn beträgt.

4. Schlauchhülle nach dem Oberbegriff des Anspruchs 1, **dadurch gekennzeichnet, daß** an den Verschlußteilen (11,12) Nuten (22) vorgesehen sind, die bei zusammengreifenden Verschlußteilen (11,12) von einander abgewandt sind, wobei die Nutflanken im wesentlichen parallel verlaufen oder nach außen konvergieren.

## Claims

1. A flexible hose envelope comprising a web-shaped sleeve (10) with longitudinally extending closing members (11, 12) and being provided with bellows-like longitudinally extending shaped parts (24),
**characterized in that** the shaped parts (24) are shaped as rounded corrugations.

2. The hose envelope of claim 1, **characterized in that** the material thickness of the sleeve (10) is equal at all places in the direction of a normal (N) to a tangent line (T) applied to the web in the region of the corrugations.

3. The hose envelope of claim 1 or 2, **characterized in that** the height (H) of the corrugations is more than twice the thickness of the web.

4. The hose envelope of claim 1, **characterized in that** the closing members (11, 12) are provided with grooves (22) that are averted from each other, when the closing members (11, 12) are in engagement, the flanks of the grooves extending substantially parallel or converge outward.

## Revendications

1. Gaine flexible formée par une chemise (10) en forme de bande qui comporte des parties de fermeture (11, 12) longitudinales et, entre celles-ci, des zones modelées (24) longitudinales en forme d'accordéon, **caractérisée en ce que** les zones modelées (24) sont conçues en forme de cannelures arrondies.

2. Gaine selon la revendication 1, **caractérisée en ce que** l'épaisseur de matière de la chemise (10), considérée dans le sens d'une normale (N) par rapport à une tangente (T) tracée contre la bande dans la zone des cannelures, est identique dans toutes les zones.

3. Gaine selon la revendication 1 ou 2, **caractérisée en ce que** la hauteur (H) des cannelures est supérieure au double de l'épaisseur de la bande.

4. Gaine selon le préambule de la revendication 1, **caractérisée en ce qu'**il est prévu sur les parties de fermeture (11, 12) des rainures (22), qui sont opposées l'une à l'autre lorsque les parties de fermeture (11, 12) sont en prise l'une dans l'autre, les flancs des rainures s'étendant sensiblement parallèlement ou convergeant vers l'extérieur.
